# EUROPEAN PATENT APPLICATION

(11) **EP 3 121 446 A1**
(43) Date of publication of application: **25.01.2017**
(21) Application number: 16179432.6
(22) Date of filing: 14.07.2016
(51) Int. Cl.: F04B 37/12, F04B 37/16, F04B 37/18, F04B 39/00, F04B 39/04

(54) **HYDROGEN COMPRESSOR AND HYDROGEN FILLING SYSTEM**

(30) Priority: 23.07.2015 JP 2015145489
(71) Applicant: Hitachi, Ltd., Tokyo 100-8280 (JP)
(72) Inventor: Inoue, Takahiro, Tokyo, 100-8280 (JP); Arai, Shigeru, Tokyo, 100-8280 (JP); Honda, Shuzo, Tokyo, 100-8280 (JP)
(74) Representative: Beetz & Partner mbB

(57) **Abstract**

Provided are a hydrogen compressor and a hydrogen filling system capable of increasing purity of a hydrogen gas via surely discharging oil trapped from a discharged gas and accumulated in a vessel even during operation of the compressor, and also preventing leakage of the hydrogen gas from an oil discharge pipe. The hydrogen compressor includes vessels of a snubber and a filter each arranged at a downstream side of the final compressing stage of the compressor. The hydrogen compressor further includes oil discharge pipes each connected with a bottom of each vessel, and level sensors each detecting a level of oil accumulated in each vessel. The oil discharge pipes include automatic valves configured to open/close based on detection values of the level sensors. The oil discharge pipes join to be an oil discharge pipe including a manual valve controlling an oil flow rate in the oil discharge pipe.

## Description

### BACKGROUND OF THE INVENTION

### 1. Field of the Invention

The present invention relates to a hydrogen compressor and a hydrogen filling system, especially, a hydrogen compressor and a hydrogen filling system discharging a hydrogen gas serving as a working gas at a high pressure used for a fuel cell vehicle.

### 2. Related Art

An example of a conventional oil flooded reciprocating compressor is disclosed in Japanese unexamined patent application publication No.H7-119638. Herein, the reciprocating compressor supplies oil to a sliding portion in the compressor to prevent the excessive wearing thereof, allowing an extension of a lifetime of the sliding members.

In a conventional oil flooded reciprocating compressor, oil is supplied to portions where a piston or a plunger is inserted inside a cylinder. Thereby, in a multi-stage reciprocating compressor, oil is accumulated in a vessel of a snubber arranged in respective compressing stages and configured to reduce the pressure pulsation, and also in a vessel of a filter configured to discharge oil contained in a gas.

Meanwhile, high purity and high pressure (e.g., a higher than 40 MPa) are demanded for the hydrogen gas to be filled in a fuel cell vehicle. Hence, an important function of an oil flooded reciprocating compressor handling a hydrogen gas is to keep purity of the high pressure hydrogen gas to be discharged as high as possible.

In this regard, an oil-free compressor may be used to keep the high purity of the hydrogen gas, as a reciprocating compressor handling a hydrogen gas used for a fuel cell vehicle. However, sliding members of such an oil-free compressor are exposed under high pressure and unlubricated conditions. Therefore, the sliding members of the oil-free compressor have a shorter lifetime than those of an oil flooded compressor, resulting in an unsuitable device for long-term operation.

On the contrary, an oil flooded compressor is configured to supply oil to sliding members thereof, whereby the sliding members have a long lifetime. Meanwhile, an oil flooded compressor is needed to reduce oil content in a discharged gas as extremely minimum via trapping the oil content in vessels of a snubber and/or a filter arranged at a downstream side of the final compressing stage. However, the oil thus trapped is accumulated in vessels of a snubber and/or a filter located under a high pressure condition. Accordingly, the following drawbacks are caused.

That is, the oil may be accumulated by a volume of the vessel. However, long-time operation of the compressor cannot be conducted, if the accumulated oil is not discharged from the vessel during operation of the compressor but only discharged during suspension of the operation.

In contrast, if the oil accumulated in the vessel is discharged by forcibly using an automatic valve during the operation of the compressor, a level of the oil in the vessel exposed under a high pressure condition may drop too rapidly for the automatic valve to make closing motion in time. This delay may discharge oil with the boosted hydrogen gas through an oil discharge pipe. The leakage of the hydrogen gas elongates a filling time of the hydrogen gas into a filling target such as a fuel cell vehicle, etc. at a downstream side.

Further, when an operator discharges the oil by manually opening a valve in every predetermined period without monitoring a level of the oil accumulated in the vessel, an operation mistake or a human error that an operator forgets the oil discharge work or opens a wrong valve may occur. If such a mistake occurs, the oil accumulated in the vessel may overflow to get into a dispenser (i.e., filling device) at a downstream side of the compressor or a fuel cell vehicle side.

Here, it should be noted that the technique disclosed in Japanese Unexamined Patent Application Publication No.H7-119638 does not deal with the case that a hydrogen gas is discharged with high purity and high pressure as a working gas. Thus, the technique does not provide a means for solving the above described drawbacks.

### SUMMARY OF THE INVENTION

The present invention has been made in view of the drawbacks described above. Accordingly, an object of the present invention is to provide a hydrogen compressor and a hydrogen filling system capable of increasing the purity of the hydrogen gas via surely discharging the oil accumulated in a vessel trapped from a discharged gas during operation of the compressor, and also preventing the hydrogen gas from leaking from an oil discharge pipe.

For solving the above drawbacks, a hydrogen compressor of the present invention includes a multi-stage reciprocating compressor having a plurality of compressing stages configured to compress a hydrogen gas, a vessel of a snubber or a filter arranged at a downstream side of the final compressing stage, an oil discharge pipe connected with a bottom of the vessel, a liquid level detector detecting a liquid level of oil accumulated in the vessel, an automatic valve opening/closing based on a detected value of the liquid level detector, and a valve arranged at an oil discharge pipe to control a flow rate of oil in the oil discharge pipe.

Further, a hydrogen filling system of the present invention includes the hydrogen compressor, and a filling device connected with a downstream outlet of the hydrogen compressor to fill the hydrogen gas into a fuel cell vehicle.

According to the present invention, provided are a hydrogen compressor and a hydrogen filling system capable of increasing the purity of a hydrogen gas via surely discharging oil accumulated in a vessel trapped from a discharged gas even during operation of the compressor, and also preventing the hydrogen gas from leaking from an oil discharge pipe.

### BRIEF DESCRIPTION OF THE DRAWINGS

FIG. 1 is a diagram schematically showing a configuration of a hydrogen filling system provided with a hydrogen compressor in an embodiment of the present invention.
FIG. 2 is a diagram schematically showing a configuration of a multi-stage reciprocating compressor illustrated in FIG.1.
FIG. 3A is a magnified diagram showing surroundings of a snubber in FIG. 1 with a part of a cross-sectional view thereof.
FIG. 3B is a magnified diagram showing surroundings of a filter in FIG. 1 with a part of a cross-sectional view thereof.

### DETAILED DESCRIPTION OF THE PRESENT INVENTION

Hereinafter, embodiments of the present invention will be described in detail referring to the attached drawings. Note, in the following drawings, the same reference symbol is given to the same type of member, and duplicated explanations will be appropriately omitted to avoid redundant descriptions.

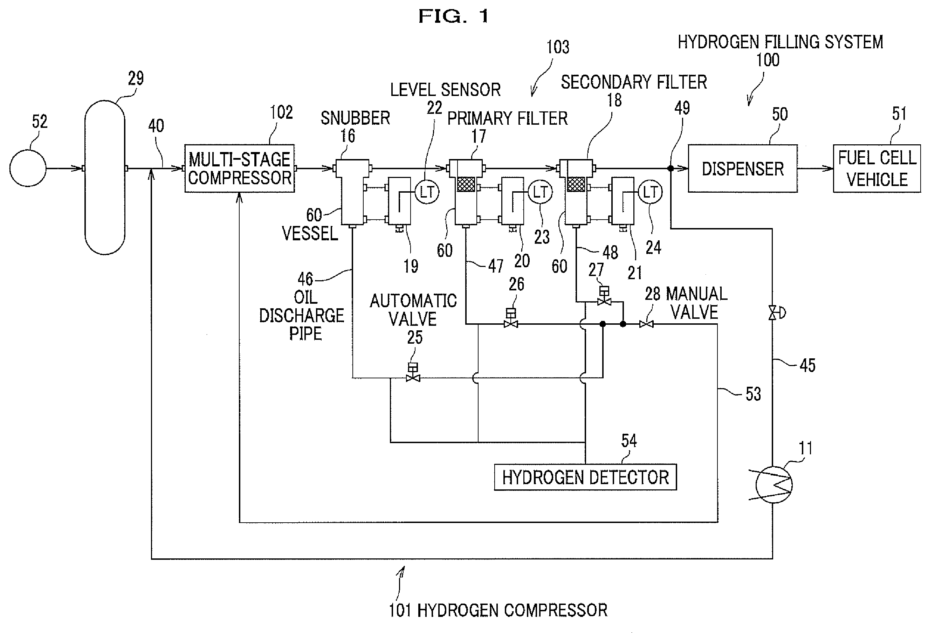

FIG.1 is a diagram schematically showing a hydrogen filling system 100 including a hydrogen compressor 101 in an embodiment of the present invention. The hydrogen filling system 100 in the present embodiment is a system which compresses a hydrogen gas to be directly filled into a fuel cell vehicle 51.

As shown in FIG. 1, the hydrogen filling system 100 includes the hydrogen compressor 101 and a dispenser (i.e., filling device) 50. The hydrogen compressor 101 is a device which compresses a hydrogen gas supplied from gas supply facilities 52 by high pressure enough to be fed to the fuel cell vehicle 51 (e.g., higher than 40 MPa). Further, the dispenser 50 is a device provided with an adaptor (not shown) fitted to a hydrogen supply port of the fuel cell vehicle 51 to fill the hydrogen gas into the fuel cell vehicle 51.

The hydrogen compressor 101 includes an oil flooded type of multi-stage reciprocating compressor 102 (referred to simply as "a compressor", hereinafter) which stepwise boosts the hydrogen gas serving as a working gas (referred to simply as "a gas", hereinafter), and an automatic oil discharger 103 which removes and discharges oil content in the gas discharged from the compressor 102.

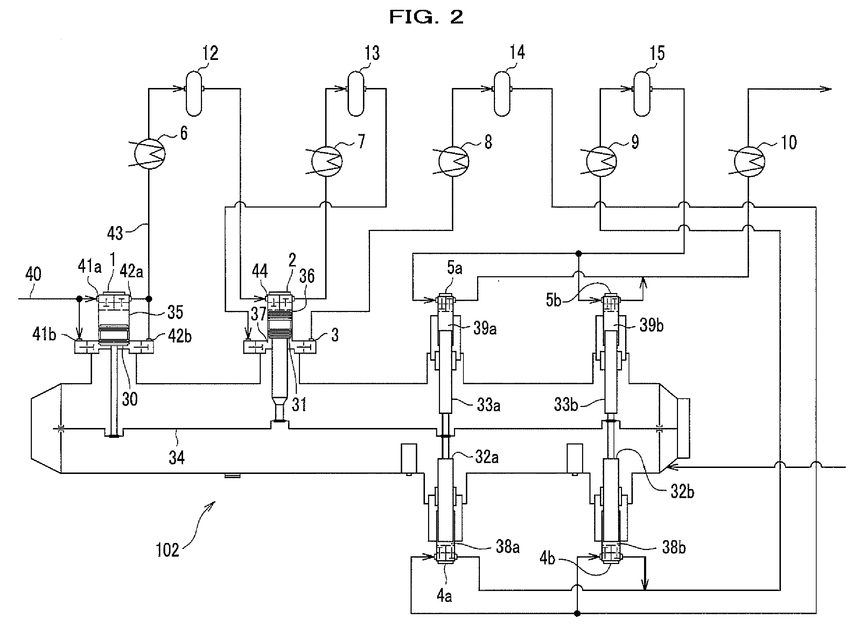

FIG. 2 is a diagram schematically showing a configuration of the compressor 102 illustrated in FIG. 1.

As shown in FIG. 2, the compressor 2 includes a plurality of compressing stages (e.g., five stages in FIG. 2) each of which compresses the hydrogen gas. More specifically, the compressor 102 is configured to have a first compressing stage 1, a second compressing stage 2, a third compressing stage 3, fourth compressing stages 4a and 4b, and fifth compressing stages 5a and 5b arranged in this order from the upstream side.

In the first compressing stage 1, a piston 30 is housed in a cylinder, and in the second compressing stage 2 and the third compressing stage 3, a piston 31 is housed in a cylinder. Further, in the fourth compressing stages 4a and 4b, plungers 32a and 32b are respectively housed in the respective cylinders, and in the fifth compressing stages 5a and 5b, plungers 33a and 33b are respectively housed in the respective cylinders.

Each of the pistons 30 and 31 and the plungers 32a, 32b, 33a and 33b is respectively connected to a crankshaft 34 that is connected to a rotary driving source such as a motor (not shown). The compressor 102 compresses gas in compression chambers 35, 36, 37, 38a, 38b, 39a, and 39b respectively formed between each end of the pistons (30 and 31) and each cylinder and each end of the plungers (32a, 32b, 33a and 33b) and each cylinder.

The gas supplied from the gas supply facilities 52 arranged at the upstream side of the compressor 102 (see FIG. 1) is fed through a suction cushioning tank 29 (see FIG. 1) and flows through a first stage suction line 40 into the compressor 102. The gas passed through the first stage suction line 40 flows into the first compressing stage 1 from first stage suction ports 41a and 41b. The gas thus compressed in the compression chamber 35 of the first compressing stage 1 is discharged from the first stage discharge ports 42a and 42b, thereby to flow into an intercooler (i.e., first stage cooler) 6 through a first discharge line 43. Then, the gas cooled in the intercooler 6 flows through a second stage suction snubber 12 into the next second compressing stage 2 via passing from a second stage suction port 44. The gas flows similarly to the manner as described above by a fifth compressing stages 5a and 5b so that the pressure of the gas discharged from the compressor 102 is increased, for example, at 80 MPa or more.

Here, note that the reference numerals 7, 8, 9 and 10 in FIG. 2 represent a second stage cooler, a third stage cooler, a fourth stage cooler and an aftercooler, respectively. Further, the reference numerals 13, 14 and 15 represent a third stage suction snubber, a fourth stage suction snubber and a fifth stage suction snubber, respectively.

As shown in FIG. 1, the gas of which pressure becomes high via compressed in the compressor 102 is cooled by the aftercooler 10 (see FIG. 2) and fed to a snubber 16 which is arranged as a fifth discharge snubber. The respective snubbers 12 to 16 are configured to reduce the pressure pulsation. Then, the gas is fed to a primary filter 17 and a secondary filter 18 to remove the oil content included in the gas. After that, the gas is filtrated by filter elements 73 and 74 placed inside the vessels 60 of the respective filters 17 and 18 so that the oil content in the gas falls in an acceptable value or less.

The gas passing through the respective filters 17 and 18 is fed into the fuel cell vehicle 51 from a downstream outlet 49 of the hydrogen compressor 101 through the dispenser 50. Herein, when the gas is not fed toward the downstream side (i.e., dispenser 50 side), the gas passing through the respective filters 17 and 18 flows through a kickback line 45 arranged branched from the downstream outlet 49. Then, the resulting gas is cooled in a kickback cooler 11, thereby to return to a suction side of the compressor 102.

Each of the sliding portions of the pistons 30 and 31 and the plungers 32a, 32b, 33a and 33b illustrated in FIG. 2 is provided with a piston ring and a rod packing as sliding parts (not shown). The piston ring is mounted on each of the pistons 30 and 31. The rod packing is housed in each packing case. Those parts seal gaps of the sliding portions, which prevents leakage of the compressed gas. In the present embodiment, oil is supplied to the respective compressing stages from oil filler holes arranged at the respective cylinders and packing cases included in the respective compressing stages 1, 2, 3, 4a, 4b, 5a and 5b so as to extend a lifetime of each sliding part. However, the oil thus supplied as mentioned above contaminates the gas targeted to be compressed.

As shown in FIG. 1, the automatic oil discharger 103 includes the snubber 16, the filters 17 and 18, level sensors 22, 23 and 24 each serving as a liquid level detector, and sensor insertion vessels 19, 20 and 21. The snubber 16 together with the filters 17 and 18 are arranged at the downstream side of the fifth compressing stages 5a and 5b which are compressing stages located as a final stage (i.e., final compressing stages). The snubber 16 and the filters 17, 18 respectively include the vessels 60 capable of accumulating the oil. The oil discharge pipes 46, 47 and 48 are connected to bottoms of the vessels 60, respectively. The level sensors 22, 23 and 24 each detect a level (i.e., liquid level) of the oil accumulated in each vessel 60.

Herein, the level sensors 22, 23 and 24 each output an H signal when detecting a predetermined high level, while the level sensors output an L signal when detecting a predetermined low level. The predetermined L signal is set at a level (i.e. value) to prevent the leakage of the gas to the oil discharge pipes 46, 47 and 48 so that a fixed amount of the oil is always kept in each vessel 60.

The oil discharge pipes 46, 47 and 48 are respectively provided with automatic valves 25, 26 and 27 which are configured to open/close based on detected values of the level sensors 22, 23 and 24. Specifically, the automatic valves 25, 26 and 27 are configured to respectively open based on the H signals of the level sensors 22, 23 and 24, while those valves are configured to close based on the L signals. For example, the detected values of the level sensors 22, 23 and 24 are inputted to a controller (not shown). Then, the controller operates the opening/closing of the automatic valves 25, 26 and 27 based on the detected values of the level sensors 22, 23 and 24.

Further, the oil discharge pipes 46, 47 and 48 join together at a downstream side of the automatic valves 25, 26 and 27, to form a single oil discharge pipe 53. The oil discharge pipe 53 is provided with a manual valve 28 such as a needle valve applicable to high pressure, serving as a valve adjusting a flow rate of the oil in the oil discharge pipe 53. The oil discharged via the oil discharge pipe 53 is collected by an oil reservoir (not shown) in the compressor 102.

When the automatic valves 25, 26 and 27 open based on the detected values of the level sensors 22, 23 and 24 under the high pressure conditions inside the respective vessels 60 during operation of the compressor 102, the oil accumulated in each vessel 60 may flow out all at once into the oil discharge pipe 53 due to the different pressure between each vessel 60 and the oil discharge pipe 53. This may cause rapid drop in the oil level.

At that time, when the automatic valves 25, 26 and 27 make closing motions, even if the timing of the closing motions delays due to some reasons, adjustment of the opening degree of the manual valve 28 to the closing direction may prevent leakage of the gas into the oil discharge pipe 53 to avoid a trouble onto the boosting operation of the compressor 102. Hereby, this may prevent a rapid inflow of the oil and a sudden drop of the oil level in each vessel 60 possibly caused due to the pressure difference between each vessel 60 and the oil discharge pipe 53 during the operation of the compressor 102. The adjustment of the opening degree of the manual valve 28 is performed, for example, at trial operation.

Further, a hydrogen detector 54 detecting a hydrogen gas is arranged at each upstream side of the automatic valves 25, 26 and 27 of the oil discharge pipes 46, 47 and 48. The automatic valves 25, 26 and 27 are configured to close when the hydrogen detector 54 detects a hydrogen gas. For example, the controller controls the opening/closing of the automatic valves 25, 26 and 27 based on a detection signal of the hydrogen detector 54. Therefore, even if the manual valve 28 becomes out of control and cannot controls the lowering rate of the oil level in each vessel 60 due to malfunction, and the gas flows in the oil discharge pipes 46, 47 and 48, the automatic valves 25, 26 and 27 are forcibly closed based on the gas detection.

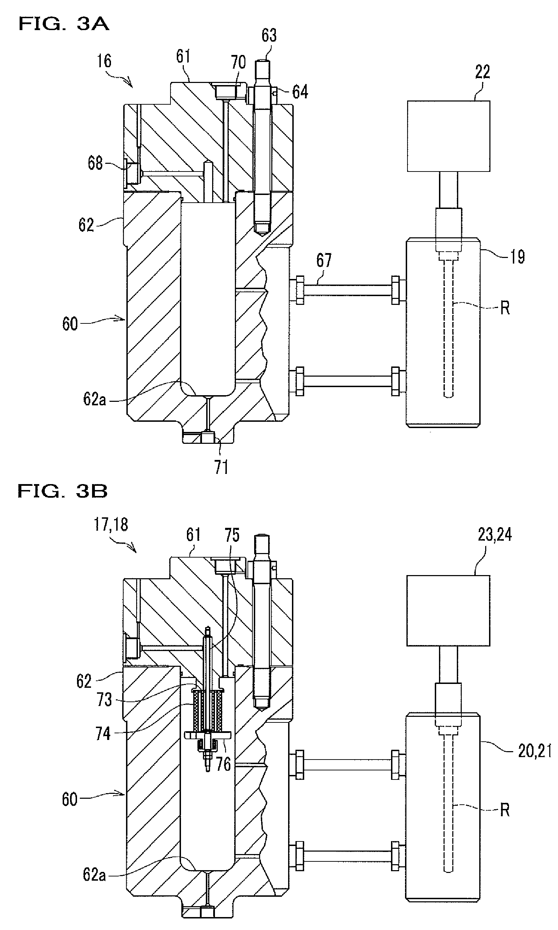

Here, FIG. 3A is a magnified diagram showing surroundings of a snubber 16 in FIG. 1 with a part of a cross-sectional view thereof. FIG. 3B is a magnified diagram showing surroundings of each of filters 17 and 18 in FIG. 1 with a part of a cross-sectional view thereof.

As shown in FIG. 3A, the vessel 60 of the snubber 16 includes an upper flange 61 and a bottle 62 formed in a hollow shape (i.e., cylindrical shape with a bottom). The vessel 60 is configured to be pressure resistant by connecting the upper flange 61 with the bottle 62 fastened with a volt 63 and a nut 64. The level sensor 22 has a sensor rod R which is a detecting element of a hydrogen gas. The level sensor 22 is attached to the sensor insertion vessel 19 so that the sensor rod R is inserted in the sensor insertion vessel 19.

The bottle 62 is connected to the sensor insertion vessel 19 via connection pipes 67 at two positions, that is, at a high position on the bottle side (i.e., corresponding to a high level of the oil in the vessel 60) and at a low position on the bottle side (i.e., corresponding to a low level of the oil in the vessel 60). Connecting the bottle 62 and the sensor insertion vessel 19 via the connection pipes 67 allows an oil level accumulated in the vessel 60 to be always monitored.

Preferably, the internal diameters of the connection pipes 67 may be set as large as possible, and the vessel 60 of the snubber 16 may be positioned as closer as possible to the sensor insertion vessel 19, in order to make the pressure loss in the connection pipes 67 minimum. The length of the sensor rod R is appropriately determined depending on the length of the vessel 60 of the snubber 16 to which the level sensor 22 is attached.

When the gas flows via a flange inlet 68 of the upper flange 61 and is fed into the bottle 62, the oil content in the gas drops on a bottom surface 62a of the bottle 62, and the oil is accumulated in the bottle 62. When a predetermined amount of the oil is accumulated in the bottle 62, the oil reaches the sensor rod R through the connection pipe(s) 67. This allows the level sensor 22 to detect an oil level inside the vessel 60 of the snubber 16.

Note that the structure of the level sensor 22 is not particularly limited to the above configuration. Further, the attachment procedure may be modified associated with a size of the vessel 60 accumulating the oil targeted to be measured. For example, when vessels of the snubber or the filters are large (not shown), the level sensor 22 may be directly attached to a lower portion of the vessel 60 without arranging the connection pipes 67.

After the gas flows into the vessel 60 of the snubber 16, the gas is discharged from a flange outlet 70 of the upper flange 61 into the pipe at the downstream side. The oil discharge outlet 71 formed at a bottom of the bottle 62 is connected with the oil discharge pipe 46.

As shown in FIG. 3B, the outer portion of the vessel 60 of the filter (17, 18), the level sensor (23, 24), and the sensor insertion vessel (20, 21) are respectively the same as the outer portion of the vessel 60 of the snubber 16, the level sensor 22 and the sensor insertion vessel 19. Thus, the descriptions common to those parts will be omitted.

Inside the vessel 60 of the filter (17, 18), an inner filter element 73 and an outer filter element 74 both having a cylindrical shape are coaxially arranged double. Each of the filter elements 73 and 74 is assembled between a reservoir 76 attached to a special fastener 75 disposed at the center thereof and the lower end of the upper flange 61. The fastener 75 is embedded in the upper flange 61 by screw fastening. For a material of the respective filter elements 73 and 74, used are micro glass fibers bonded by perfluoro hydrocarbon resin.

The oil content separated by the respective filter elements 73 and 74 of the filter (17, 18) does not directly permeate into the respective filter elements 73 and 74, thereby to be isolated therefrom due to gravity. The isolated oil drops on the bottom surface 62a of the bottle 62 to be accumulated in the bottle 62. Then, the level sensor (23, 24) detects an oil level in the vessel 60 of the filter (17, 18).

As described hereinbefore, the hydrogen compressor 101 of the present embodiment includes the vessels 60 of the snubber 16 and the filters 17 and 18 each arranged at a downstream side of the fifth compressing stages 5a and 5b which are the final compressing stages of the compressor 102. Further, the hydrogen compressor 101 includes the oil discharge pipes 46, 47 and 48 respectively connected with bottoms of the vessels 60 and the level sensors 22, 23 and 24 each detecting a level of the oil accumulated in each vessel 60.

Moreover, the automatic valves 25, 26 and 27, which are configured to open/close based on detection values of the level sensors 22, 23 and 24, are arranged at the oil discharge pipes 46, 47 and 48. Furthermore, the oil discharge pipe 53 to which the oil discharge pipes 46, 47 and 48 are joined together is provided with the manual valve 28 for controlling a flow rate of the oil in the oil discharge pipe 53.

The above configuration enables the oil accumulated in the vessels 60 to be always monitored by the level sensors 22, 23 and 24, and to be discharged from the vessels 60. Therefore, overflow of the oil from the final compressing stages to the downstream side such as the dispenser 50 and the fuel cell vehicle 51 may be prevented.

Further, controlling the opening degree of the manual valve 28 may prevent the rapid inflow of the oil and the sudden drop of the oil level in each vessel 60, caused by the pressure difference between each vessel 60 and the oil discharge pipe 53 while discharging the oil during the operation of the compressor 102. Hence, this configuration may prevent any trouble in boosting gas operation of the compressor 102 caused by the leakage of the gas into the oil discharge pipe 53, even though the closing timing of the automatic valves 25, 26 and 27 delays due to some reasons when the automatic valves 25, 26 and 27 make closing motions based on the L signals of the level sensors 22, 23 and 24. Moreover, discharging the oil alone may prevent the pressure drop of the gas thus boosted in the vessels 60 of the snubber 16 and the filters 17 and 18. Accordingly, the above configuration realizes no delay of a filling time of the gas to a filling target at the downstream side such as a fuel cell vehicle 51.

According to the present embodiment, provided are the hydrogen compressor 101 and the hydrogen filling system 100 capable of increasing the purity of the hydrogen gas via surely discharging the oil accumulated in the vessels 60 thus trapped from the discharged gas, and also preventing the leakage of the hydrogen gas from the oil discharge pipes 16, 47 and 47, even while operating the compressor 102.

Further, according to the present embodiment, the automatic valves 25, 26 and 27 are configured to close when the hydrogen detector 54 detects a hydrogen gas. This configuration allows the automatic valves 25, 26 and 27 to be forcibly closed based on the gas detection of the hydrogen detector 54, even when the manual valve 28 fails to prevent the sudden drop of the oil level in the vessels 60 due to malfunction and the gas flows in the oil discharge pipes 46, 47 and 48. Hence, the leakage of the boosted hydrogen gas with the oil discharged from the oil discharge pipes 46, 47 and 48 may be more surely prevented.

Moreover, the hydrogen filling system 100 of the present embodiment is connected with the hydrogen compressor 101 at the downstream outlet 49 thereof, and includes the dispenser 50 which fills a hydrogen gas to the fuel cell vehicle 51. Here, in the hydrogen compressor 101, the arrangement of the manual valve 28 may prevent the sudden drop of the oil level in the vessels 60 exposed under high pressure and the inflow of the gas into the oil discharge pipes 46, 47 and 48. This configuration realizes no lowering of the pressure of hydrogen gas thus boosted. Hence, even when the hydrogen filling system 100 is configured to be a direct filling system in which the dispenser 50 is directly connected with the downstream outlet 49 of the hydrogen compressor 101 with arranging no accumulator, the gas may be filled to the fuel cell vehicle 51 without delay of the filling time. Therefore, the above configuration is also preferable.

Hereinbefore, the present invention has been described in detail referring to the embodiments. However, the present invention is not limited to those embodiments, and various modifications may be includes therein. For example, the above embodiments have been described only to explain the present invention in detail for letting the present invention easily understood. Therefore, the present invention is not necessarily limited to an embodiment having all of the components thus explained. Further, other components may be added to or replaced with a part of the components of the above described embodiments, and deletion of a part of the components may be also allowable.

For example, in the above described embodiments, the compressor 102 is configured to include the five compressing stages. However, the present invention is not limited to those embodiments, and may be configured to include any number of compressing stages such as three compressing stages.

Further, in the above described embodiments, both the snubber 16 and the filter (17, 18) are arranged at the downstream side of the final compressing stage of the compressor 102. However, the present invention is not limited to those embodiments. That is, either of the snubber and the filter may be arranged therein. Further, the number of the filters thus arranged is not limited to two, and may be one, for example.

Moreover, in the above described embodiments, the compressor 102 is configured to include both the piston (30, 31) and the plunger (32a, 32b, 33a, 33b). However, the present invention is not limited to those embodiments. That is, the compressor 102 may be configured to have either of the piston and the plunger.

Furthermore, in the above described embodiments, the sudden drop of the level of oil accumulated in the vessels 60 is prevented by controlling the opening degree of the manual valve 28 arranged at the downstream side of the automatic valves 25, 26 and 27. However, the present invention is not limited to those embodiments. For example, the manual valve 28 may be replaced with a regulation valve which is driven by a detection value of a sensor. That is, a flow rate sensor or a pressure sensor may be arranged at a secondary side (i.e., downstream side) of the regulation valve. Then, the opening degree of the regulation valve may be controlled by the detection values of those sensors.

Herein, when a flow rate sensor is arranged, the regulation valve may be controlled so that the flow rate of the discharged oil becomes extremely small. When a pressure sensor is arranged, the regulation valve may be controlled so that the pressure in the oil discharge pipe becomes constant.

## Claims

1. A hydrogen compressor comprising:
a multi-stage reciprocating compressor including a plurality of compressing stages configured to compress a hydrogen gas;
a vessel of a snubber or a filter arranged at a downstream side of the compressing stage located as a final stage;
an oil discharge pipe connected with a bottom of the vessel;
a liquid level detector detecting a liquid level of oil accumulated in the vessel;
an automatic valve arranged at the oil discharge pipe and configured to open/close based on a detection value of the liquid level detector; and
a valve arranged at the oil discharge pipe and configured to control a flow rate of oil in the oil discharge pipe.

2. The hydrogen compressor described in claim 1, further comprising a hydrogen detector arranged at the oil discharge pipe and configured to detect a hydrogen gas, wherein
the automatic valve is configured to open when the hydrogen detector detects a hydrogen gas.

3. A hydrogen filling system comprising:
the hydrogen compressor described in claim 1 or claim 2; and
a filling device connected with a downstream outlet of the hydrogen compressor and configured to fill a hydrogen gas into a fuel cell vehicle.
